# EUROPÄISCHE PATENTSCHRIFT

(11) **EP 0 364 691 B1**
(45) Veröffentlichungstag und Bekanntmachung des Hinweises auf die Patenterteilung: **19.01.1994**
(21) Anmeldenummer: 89115161.5
(22) Anmeldetag: 17.08.1989
(51) Int. Cl.: C04B 41/86, C03C 8/14, C04B 41/90

(54) **Verfahren zur Herstellung von leuchtkräftigen Dekoren**
Method of producing a highly lustrous decoration
Méthode pour produire des décorations à grandes intensités lumineuses

(30) Priorität: 18.10.1988 DE 3835402
(43) Veröffentlichungstag der Anmeldung: 25.04.1990
(73) Patentinhaber: DEGUSSA AKTIENGESELLSCHAFT, 60311 Frankfurt (DE)
(72) Erfinder: Diefenbach, Fritz, D-6141 Alsbach-Hähnlein (DE); Scholtis, Helmut, D-6450 Hanau 9 (DE); Dorer, Kai, D-6056 Heusenstamm (DE)

(56) Entgegenhaltungen:
- EP-A- 0 082 984
- DE-A- 3 524 912
- GB-A- 2 063 246
- CHEMICAL ABSTRACTS, Band 97, Nr. 16, Oktober 1982, Seite 310, Zusammenfassung Nr. 132288n, Columbus, Ohio, US;

## Beschreibung

Die Erfindung betrifft ein Verfahren zur Herstellung von leuchtkräftigen Dekoren mit guter Abriebbeständigkeit auf Keramik und silikatischen Unterlagen, wie Porzellan, Steinzeug. Steingut, Email oder Glas, durch Einbrennen von Dekorfarben (Schmelzfarben, Aufglasurfarben) sowie Lüster- und Edelmetallpräparaten.

Dekorfarben sowie Lüster- und Edelmetallpräparate finden zur Dekoration von keramischen und silikatischen Oberflächen verbreitet Verwendung. Sie sind beispielsweise in "Ullmanns Enzyklopädie der technischen Chemie, Bd. 14 (1977), Stichwort "Keramische Farben" beschrieben. Unter Dekorfarben versteht man Schmelzfarben bzw. Aufglasurfarben.

Es ist schwierig, Dekorfarben neben Lüster- und Edelmetallpräparaten in einem Dekor zu verarbeiten, da einige der in den Lüster- und Edelmetallpräparaten enthaltenen metallischen Elemente mit den Dekorfarben beim Einbrand zu stark gefärbten Produkten reagieren. So bewirkt Gold eine intensive Violettfärbung und Silber eine Verfärbung nach Gelbbraun. Neben der Verfärbung an den Kontaktstellen zwischen Dekorfarben und Lüster oder Edelmetallpräparaten erleiden die meisten Dekorfarben aufgrund ihrer Transparenz eine erhebliche Einbuße ihrer Leuchtkraft durch die dunkle Farbe der darunterliegenden Lüster- und Edelmetallschichten.

Aus der DE-OS 29 45 288 ist es bekannt, auf hitzebeständige Keramikgegenstände wärmeübertragende silikatische Überzüge aufzutragen, bestehend aus einem Email, dem mindestens 10 Gew.-% Titandioxidbeschichtete Glimmerteilchen zugesetzt ist. Zur Herstellung von leuchtkräftigen Dekoren in Zusammenwirken mit Lüster- und Edelmetallpräparaten werden diese Emails allerdings nicht verwendet.

Aus der DE-C 35 24 912 ist ein Verfahren zur Herstellung von kratz- und abriebfesten Edelmetalldekoren auf keramischen Oberflächen bekannt, wobei zunächst ein Glanzedelmetallpräparat und darüber ein feingemahlener, mit einem Siebdrucköl versetzter, silikatischer Fluß aufgetragen wird und beide Schichten in einem Brand zwischen 450 °C und 1050 °C eingebrannt werden. Die erhaltenen Dekore haben den Charakter von Polierpräparaten.

Wie aus Chemical Abstracts 97 (1982) 132288n hervorgeht, lassen sich Dekore auf keramischen Artikeln auch dadurch herstellen, daß der keramische Artikel mit einer Paste, welche eine Glasfritte, ein mit TiO₂, Fe-Oxid oder Cr₂O₃ beschichtetes Glimmerpulver und ein beim Erwärmen erweichendes Harz enthält, beschichtet und der beschichtete Artikel auf 600 °C erhitzt wird.

Es war daher Aufgabe der vorliegenden Erfindung, ein Verfahren zur Herstellung von leuchtkräftigen, Farbkontraste aufweisenden Dekoren mit guter Abriebbeständigkeit auf Keramik und silikatischen Unterlagen, wie Porzellan, Steinzeug, Steingut, Email oder Glas, durch Beschichten der Unterlage mit einem Lüster- oder Edelmetallpräparat und darüber einer Dekorfarbe oder in umgekehrter Reihenfolge und Einbrennen zu entwickeln, bei dem keine störenden Verfärbungen beim Brand auftreten.

Diese Aufgabe wird erfindungsgemäß dadurch gelöst, daß als Dekorfarbe ein Glimmerpräparat verwendet wird, bei dem die Glimmerplättchen mit einer dünnen lichtundurchlässigen oder lichtdurchlässigen Schicht aus einem Metalloxid beschichtet sind, und daß die Dekorfarbe und das Lüster- und Edelmetallpräparat einzeln oder zusammen bei 500 bis 1100° C eingebrannt werden.

Vorzugsweise verwendet man für die Beschichtung der Glimmerplättchen Titanoxid oder Eisenoxid.

Pigmente mit Glimmerstuktur, die mit Titanoxid oder Eisenoxid oder einem sonstigen Metalloxid beschichtet sind, lassen sich zu Dekorfarben verarbeiten. Diese Dekorfarben sind in folgenden als Metallic- und Interferenzfarben bezeichnet.

Interferenzfarben reflektieren einen Teil des Lichtspektrums und lassen den übrigen Teil des Lichts durch. Von einer weissen Glasurunterlage wird das durchgelassene Licht wieder reflektiert und rekombiniert sich mit dem von den Pigmenten reflektierten Teil des Spektrums wieder zu weissem Licht. Die Interferenzfarben erscheinen farblos-weiss, nur bei seitlicher Betrachtung erkennt man ein schwaches Irisieren.

Auf einer dunklen Glasur (schwarz, kobaltblau oder braun) wird das durchgelassene Licht dagegen durch die dunkle Glasur absorbiert und die Interferenzfarbe leuchtet im Farbton des vom Pigment reflektierten Spektralanteils (rot, goldgelb, grün, blau oder violett).

Metallicfarben reflektieren ebenfalls einen Teil des Lichtspektrums, absorbieren aber den Rest. Deshalb erscheinen sie auf hellen und dunklen Glasuren gleich gefärbt.

Durch die blättchenartige Struktur der Glimmerpigmente reflektieren die Interferenz- und Metallicfarben das Licht bevorzugt in eine Richtung, ähnlich einer polierten Metalloberfläche. Durch das andersartige Absorptionsverhalten ist der Farbton dieser Farben wesentlich intensiver und leuchtender als der üblichen Dekorfarben.

Überraschenderweise werden diese Metallic- und Interferenzfarben im Gegensatz zu üblichen Dekorfarben durch Lüster- und Edelmetallpräparate nicht verfärbt. Dadurch ergeben sich völlig neue Dekormöglichkeiten auf Glas, Email, Steingut, Porzellan und anderen keramischen Oberflächen, die eine bisher nichtgekannte Farbintensität und einen bisher nicht bekannten Farbkontrast aufweisen.

Außerdem sind diese Dekore gegen mechanischen Abrieb sehr stabil. Lüster- und Glanzgolddekore lassen sich sonst üblicherweise mit haushaltüblichem Scheuersand leicht zerkratzen und zerstören.

Als lichtdurchlässige Interferenzfarben verwendet man vorzugsweise titandioxidbeschichtete Glimmerplättchen, als lichtundurchlässige Metallicfarben eisenoxidbeschichtete Glimmerplättchen.

Folgende Beispiele sollen das erfindungsgemäße Verfahren näher erläutern:
1. Eine keramische Wandfliese wird flächig mit einem Glanzplatinpräparat, bestehend aus einer Lösung von Platin- und Goldresinaten in Terpenkohlenwasserstoffen (Edelmetallgehalt: 1,5 % Platin, 7 % Gold) im Siebdruck (Polyestersiebgewebe mit 120 Fäden/cm) beschichtet. Nach dem Trocknen wird darüber eine Paste aus 25 Gew. % einer Interferenzfarbe aus Glimmerplättchen von 30 µm mittlerer Größe beschichtet mit 0,05 µm Titandioxid, 30 Gew. % eines Glasflusses, bestehend aus 50 Gew.% PbO, 22 Gew. % SiO₂, 17 Gew. % B₂O₃, 6 Gew. % Al₂O₃ und 5 Gew. % Na₂O, und 45 Gew. % eines Siebdruckmediums (85 % Pineöl und 15 Gew. % Athylzellulose) ebenfalls im Siebdruck (Polyestergewebe mit 73 Fäden/cm) aufgebracht.
   Nach dem Trocknen wird die Fliese im Durchlaufofen bei 800 Grad Celsius, 50 min lang eingebrannt. Man erhalt ein Dekor mit leuchtend grünen Sprenkeln auf einer silbern spiegelnden Unterschicht. Durch Kratzen mit einem Messer und durch Scheuern mit Scheuersand lässt sich das Dekor nicht beschädigen.
   Mit üblichen Schmelzfarben ist diese Dekoration nicht möglich, aufgrund mangelnder Deckkraft sieht ein Gelbgrün auf dunkler Unterlage oliv aus. Außerdem wird durch aus dem Glanzplatin aufgenommenes Gold der Grünfarbton äußerst schmutzig.
2. Ein Porzellanteller wird mit einem Sprenkeldekor versehen. Da ein Teller nicht eben ist, wird er üblicherweise mit einem keramischen Schiebebild dekoriert. Hierzu wird ein Spezialpapier mit wasserlöslicher Leimschicht in folgender Reihenfolge im Siebdruck bedruckt. Die erforderliche Trocknung erfolgt nach jedem Druckgang.
   a) Rubinlüster, bestehend aus einer Lösung von Gold-, Silber- und Titanresinat in Terpenkohlenwasserstoffen (Metalgehalt: 2 % Au, 2,5 % Ag, 1 % Ti)
      Polyestergewebe 165 Faden/cm;
   b) Schutzfilm der Zusammensetzung 70 % Trimethylenbenzol und 30 Gew. % Polybuthylmethacrylat
      Polyestergewebe 120 Faden/cm;
   c) Sprenkel aus einer Paste mit 25 Gew. % eines Interferenzpigments der Zusammensetzung 64 Gew.% Muscovit und 36 Gew. % Titandioxid,
      30 Gew. % eines Glasflusses analog Beispiel 1
      45 Gew. % Siebdruckmedium der Zusammensetzung
      37 Gew. % Polybuthylmethacrylat und 63 Gew. % Butylglycolacetat
      mit Polyestergewebe 73 Faden/cm;
   d) Filmlösung der Zusammensetzung 65 Gew. % Trinethylbenzol und 35 Gew. % Polybuthylmethacrylat
      Polyestergewebe 30 Faden/cm.

   Durch Wässern dieses Druckes läßt sich die Filmschicht mit den Dekorschichten vom Papier ablösen und auf den Teller übertragen. Das Dekor wird bei 770 Grad Celsius eingebrannt. Es entsteht ein leuchtend stahlblaues Sprenkeldekor auf transparentem, rubinrotem Untergrund.
3. Auf eine Kosmetikflasche wird ein Violettlüster, bestehend aus einer Lösung von Gold- und Titanresinat in Terpenkohlenwasserstoffen (1,2 % Au. 3 % TiO₂) flächig mit Polyestergewebe (165 Faden/cm) aufgedruckt. Darüber wird ein Dekor- und Schriftfeld mit einer Paste aus 65 Gew. % einer Metallicfarbe für Glas, bestehend aus einem eisenoxidbeschichteten Glimmer und einem Glasfluss (75 % SiO₂, 16 % B₂O₃, 9 % SiO₂) und 35 Gew. % eines Siebdruckmediums (13 Gew. % Polybuthylmethacrylat in 87 Gew. % Pineöl) über ein Polyestergewebe mit 58 Fäden/cm aufgebracht. Nach dem Einbrand bei 580 Grad Celsius liegt das Signet und die Schrift mattgold auf violettem Untergrund.
   Außer durch Siebdruck können an Lüster- und Edelmetallpräparate und die Metallic- und Interferenzfarben auch im Pinsel- oder Spritzauftrag oder im Umdruck appliziert werden.
   Auch der umgekehrte Auftrag von Interferenz- und Metallicfarben zuerst und darauf Lüster, führt zu interessanten Resultaten.
   Auf eine dunkelblaue Wandfliese wird zuerst eine Paste aus 25 Gew. % Interferenzpigment gemäß Beispiel 2, 30 Gew. % eines Glasflusses gemäß Beispiel 1,
   und 45 Gew. % Siebdruckmedium gemäß Beispiel 2, mit Polyestergewebe 73 Faden/cm als Sprenkeldekor aufgebracht. Darüber wird ein Auroralüster, bestehend aus einer Lösung von Eisen-und Titannaphthenaten in Terpenkohlenwasserstoffen mit Polyestergewebe 165 Faden/cm mit einem abgewandelten Sprenkelmuster aufgedruckt. Die Wandfliese wird bei 760 Grad Celsius gebrannt.
   Dort wo die Interferenzfarbe allein liegt, ist sie strahlend stahlgrün. Der Lüster selbst hebt sich dunkeloliv mit Lüstereffekt von der dunkelblauen Glasur ab. Dort wo der Lüster auf der Interferenzfarbe liegt, wird der stahlgrüne Farbton zu einem ebenso leuchtenden Gelbgrün verschoben.

## Patentansprüche

1. Verfahren zur Herstellung von leuchtkräftigen, Farbkontraste aufweisenden Dekoren mit guter Abriebbeständigkeit auf Keramik und silikatischen Unterlagen, wie Porzellan, Steinzeug, Steingut, Email oder Glas, durch Beschichten der Unterlage mit einem Lüster- oder Edelmetallpräparat und darüber einer Dekorfarbe oder in umgekehrter Reihenfolge und Einbrennen,
dadurch gekennzeichnet,
daß als Dekorfarbe ein Gemisch aus einem Glasfluß und einem Glimmerpräparat verwendet wird, bei dem die Glimmerplättchen mit einer dünnen lichtundurchlässigen oder lichtdurchlässigen Schicht aus einem Metalloxid beschichtet sind, und daß die Dekorfarbe und das Lüster-und Edelmetallpräparat einzeln oder zusammen bei 500 bis 1100 °C eingebrannt werden.

2. Verfahren nach Anspruch 1,
dadurch gekennzeichnet,
daß als Metalloxide für die Beschichtung der Glimmerplättchen Titanoxid oder Eisenoxid verwendet wird.

## Claims

1. Process for the manufacture of brilliant decorations exhibiting colour contrasts and good resistance to abrasion on ceramics and silicate bases, such as porcelain and china, stoneware, earthenware, enamel or glass, by coating the base with a glaze or precious metal preparation and on this a decorative pigment, or vice versa, and then annealing these, characterised in that a mixture of a glass fusion and a mica preparation is used as decorative pigment, the mica lamellae being coated with a thin non-translucent or translucent layer of a metal oxide, and that the decorative pigment and the glaze and precious metal preparation are annealed individually or together at 500 to 1100°C.

2. Process as claimed in Claim 1, characterised in that titanium oxide or iron oxide is used as metal oxide for coating the mica lamellae.

## Revendications

1. Procédé de production de décors présentant des contrastes de couleurs, lumineux ayant une bonne résistance à l'abrasion, sur des substrats en céramique et silicatés, comme la porcelaine, le grès, la faïence, l'émail ou le verre, par recouvrement du substrat avec une préparation donnant de l'éclat ou une préparation à base de métaux nobles, et par dessus cela, une couleur de décor ou en une séquence inverse et cuisson, caractérisé en ce que l'on utilise comme couleur de décor un mélange à base d'émail et d'une préparation micacée, dans laquelle les lamelles de mica sont recouvertes d'une couche mince opaque à la lumière ou transparente, à base d'un oxyde métallique et en ce que la couleur de décor et la préparation donnant le lustre et la préparation à base de métal noble, séparément ou ensemble, sont cuites de 500 à 1100°C.

2. Procédé selon la revendication 1, caractérisé en ce que comme oxyde métallique pour la couverture des lamelles de mica, on utilise de l'oxyde de titane ou de l'oxyde de fer.
